# EUROPÄISCHE PATENTSCHRIFT

(11) **EP 2 074 843 B1**
(45) Veröffentlichungstag und Bekanntmachung des Hinweises auf die Patenterteilung: **15.06.2011**
(21) Anmeldenummer: 07818485.0
(22) Anmeldetag: 27.09.2007
(51) Int. Cl.: H04W 4/12

(54) **Verfahren zur Vernetzung einer mehrzahl von konvergenten messaging Systemen und entsprechendes Netzsystem**
Method for networking a plurality of convergent messaging systems and corresponding network system
Procédé pour la mise en réseau d'une pluralité de systèmes de messagerie convergents et système de réseau correspondant

(30) Priorität: 27.09.2006 DE 102006047112
(43) Veröffentlichungstag der Anmeldung: 01.07.2009
(73) Patentinhaber: T-Mobile International AG & Co. KG, 53227 Bonn (DE)
(72) Erfinder: RÖBKE, Matthias, 50859 Köln (DE)
(74) Vertreter: Hössle Patentanwälte Partnerschaft
(86) Internationale Anmeldenummer: PCT/EP2007/008402
(87) Internationale Veröffentlichungsnummer: WO 2008/037467

(56) Entgegenhaltungen:
- EP-A- 0 777 394
- WO-A-00/56091
- WO-A-2004/030380

## Beschreibung

Die vorliegende Erfindung betrifft ein Verfahren zur Vernetzung einer Mehrzahl von Anbietern eines konvergenten Nachrichtendienstes in einem Netzsystem. Ferner betrifft die vorliegende Erfindung ein entsprechendes Netzsystem mit einer Vernetzung einer Mehrzahl von Anbietern eines konvergenten Nachrichtendienstes. Die vorliegende Erfindung bezieht sich auch auf ein Computerprogramm und ein Computerprogrammprodukt.

### Hintergrund der Erfindung

In der Mobilfunktechnologie sind heute verschiedene sog. Messaging Dienste bekannt. Unter einem Messaging Dienst soll im Rahmen der vorliegenden Erfindung jegliche Art von Informations- und Nachrichtendienst verstanden werden, der in der Mobilfunktechnologie verfügbar ist bzw. verfügbar gemacht werden kann. Darunter fallen bspw. SMS (Short Message Service), MMS (Multimedia Messaging Service), EMS (Enhanced Messaging Service), IM (Instant Messaging), PTT (Push-To-Talk)-Dienst. Diese verschiedenen Dienste sind derzeit als einzelne sog. Silos aufgebaut. Das bedeutet, dass jeder dieser Dienste quasi unabhängig von dem jeweils anderen Dienst existiert. Dieser derzeit vorherrschende Silo-Ansatz wird in absehbarer Zeit durch einen sog. "konvergenten Messaging"-Ansatz ersetzt werden. Dabei versteht man unter Konvergenz ein Zusammenführen der verschiedenen Messaging Dienste und somit der damit verbundenen möglicherweise unterschiedlichen Übertragungstechniken. Dies umfasst möglicherweise eine Integration verschiedener Kommunikationsdienste, wie bspw. der Datenkommunikation, mit Telekommunikationsdiensten, wie der Mobilkommunikation, eine Integration von Übertragungstechniken und von Medieninhalten, so dass bspw. Grafiken, Audio, Text und Video über identische Medien übertragen werden können. Eine derartige Substitution existierender Messaging Dienste bedeutet jedoch, dass jeder Dienstanbieter seine eigene "konvergente Messaging"-Umgebung realisiert. Um jedoch eine möglichst große Gruppe an Kunden ansprechen zu können, müssen die somit gebildeten konvergenten Messaging Systeme bzw. konvergenten Nachrichtensysteme eines jeden Dienstanbieters miteinander kommunizieren.

Das Dokument WO 00/56091 A1 offenbart ein System und ein Verfahren zur Übermittlung von Kurznachrichten zwischen zwei Netzwerken mit unterschiedlichen Protokollen für deren Übermittlung.

Da bislang ein derartiges Szenario noch nicht realisiert ist, ist auch noch keine Möglichkeit bekannt, eine möglichst einfache und effiziente Kommunikation zwischen "konvergenten Messaging"-Umgebungen verschiedener Dienstanbieter miteinander zu vernetzen, um eine gute Kommunikation zwischen diesen Anbietern zu erreichen. Es war nunmehr eine Aufgabe der vorliegenden Erfindung ein Verfahren zur Realisierung einer effizienten Vernetzung der verschiedenen Dienstanbieter eines "konvergenten Messaging Dienstes" bereitzustellen. Ferner war es eine Aufgabe der vorliegenden Erfindung ein entsprechendes Netzsystem mit einer effizienten Vernetzung derartiger Dienstanbieter vorzuschlagen.

### Zusammenfassung der Erfindung

Die oben genannte Aufgabe wird gelöst durch ein Verfahren mit den Merkmalen von Patentanspruch 1 und einem Netzsystem mit den Merkmalen von patentanspruch 8. Die jeweils abhängigen Ansprüche beschreiben vorteilhafte Ausführungsformen.
Gemäß Patentanspruch 1 wird ein Verfahren zur Vernetzung einer Mehrzahl von Anbietern eines konvergenten Nachrichtendienstes in einem Netzsystem bereitgestellt. Dabei werden mehrere Vermittlerfunktionseinheiten vorgesehen, die physikalisch zwischen die einzelnen Anbieter geschaltet werden und bei einem zwischen den Anbietern auszuführenden Nachrichtentransport eine zentrale Routingfunktion innerhalb des Netzsystems übernehmen. Der genannte konvergente Nachrichtendienst umfasst, wie oben bereits erwähnt, jegliche Art von Informations- und Nachrichtendienst, der in der Mobilfunktechnologie verfügbar ist bzw. verfügbar gemacht werden kann. Das heisst, in Worten der Beschreibung des Standes der Technik, dass es sich hier bei dem Nachrichtendienst um einen "Messaging Dienst" handelt. Bei der zentralen vermittlerfunktionseinheit handelt es sich gemäß einer in der Mobilfunktechnologie verwendeten Terminologie um einen zentralen Broker. Die zentralen Vermittlerfunktionseinheiten, die zwischen die einzelnen Anbieter geschaltet werden fungieren als Routingfunktionseinheiten zwischen den einzelnen Dienstanbietern bzw. deren jeweiligen konvergenten Nachrichtensystemen. Unter einem Router versteht man im allgemeinen eine Vermittlungsstelle in einem Netzsystem, durch welche Datenpakete von einem Netzwerk in ein anderes weitergeleitet werden. Das Netzsystem, wie bspw. das Internet, funktioniert dabei als Verbund einzelner Netzwerke, die bspw. über einen derartigen Router miteinander verbunden sind. Im vorliegenden Fall dienen die Broker als Routingfunktion, die die einzelnen Anbieter des konvergenten Nachrichtendienstes bzw. deren damit verbundenen konvergenten Nachrichtendienstsysteme bzw. -umgebungen miteinander verbinde. Mit Hilfe der Brokeren bzw. der Vermittlerfunktionseinheiten muss nunmehr nicht jeder einzelne Anbieter eines konvergenten Nachrichtendienstes bzw. das damit verbundene konvergente Nachrichtensystem mit allen anderen Anbietern interagieren, sondern kann zentral mit den Vermittlerfunktionseinheiten bzw. den Brokern kommunizieren. Die Vermittlerfunktionseinheiten, welche physikalisch mit einer Mehrzahl von Dienstanbietern verbunden sind, übernehmen so bei einem zwischen den Anbietern auszuführenden Nachrichtentransport den Transport der entsprechenden Nachricht zu-einem jeweiligen Zielanbieter.

Das bedeutet, dass gemäß einer Ausführungsform des erfindungsgemäßen Verfahrens die Vermittlerfunktionseinheit bei einem Nachrichtentransport von einem ersten Anbieter zu einem zweiten Anbieter gegenüber dem ersten Anbieter als Adressat und gegenüber dem zweiten Anbieter als Absender der zu transportierenden Nachricht fungiert, wodurch zwischen der Vermittlerfunktionseinheit und den jeweiligen Anbietern eine 1:n-Beziehung realisiert wird. Somit ist es in einem konvergenten "Messaging"- oder Nachrichtenumfeld nicht notwendig 1:1-Beziehungen zwischen den Dienstanbietern zu realisieren, sondern es ist lediglich eine 1:n-Beziehung zwischen dem jeweiligen Dienstanbieter und der Vermittlerfunktionseinheit notwendig, um ein Interworking mit einer Mehrzahl anderer Anbieter zu ermöglichen.

Es ist denkbar, dass der konvergente Nachrichtendienst mindestens Dienste aus der Gruppe bestehend aus SMS, MMS, IM, EMS und Push-To-Talk zusammenführt.

Ferner sind bei dem erfindungsgemäßen verfahren mehrere Vermittlerfunktionseinheiten in dem Netzsystem vorgesehen, die jeweils unmittelbar oder mittelbar zwischen die Anbieter geschaltet werden.

Dabei sind mehrere Vermittlerfunktionseinheiten zumindest zum Teil in Reihe miteinander geschaltet. Dadurch ist es möglich, dass mehrere Vermittlerfunktionseinheiten bzw. Broker am Transport einer Nachricht beteiligt sind, die von einem Anbieter zu einem Zielanbieter transportiert werden soll.

Gemäß einer weiteren Ausführungsform des erfindungsgemäßen Verfahrens wird zur Nachrichtenübertragung ein Transportprotokoll bereitgestellt bzw. verwendet, welches dazu konzipiert ist, die mindestens eine Vermittlerfunktionseinheit sowohl als Adressat als auch als Absender einzusetzen. Das bedeutet, dass der mindestens einen Vermittlerfunktionseinheit eine Adresse zugeordnet wird. Im Falle des Vorhandenseins von mehreren Vermittlerfunktionseinheiten muss entsprechend jeder der Vermittlerfunktionseinheiten eine jeweilige Adresse zugeordnet werden.

Ferner ist es denkbar, dass Mechanismen vorgesehen werden, durch welche jedem bei einem Nachrichtentransport als Zielanbieter fungierenden Anbieter die Adresse der mindestens einen beim Nachrichtentransport zwischengeschalteten Vermittlerfunktionseinheit zwecks Adressierung mindestens einer möglichen Antwortnachricht zur Verfügung gestellt wird. Darüber hinaus ist es auch möglich, dass im Falle des Vorhandenseins mehrerer Vermittlerfunktionseinheiten, die ggf. am Transport einer Nachricht zwischen einem Anbieter und einem Zielanbieter beteiligt sind, dem Ziel-Anbieter alle Adressen der involvierten Vermittlerfunktionseinheiten bekannt sind, bzw. zur Verfügung gestellt werden so dass der Zielanbieter in der Lage ist, mögliche Antwortnachrichten auch unmittelbar an jede der Vermittlerfunktionseinheiten zu adressieren, die wiederum diese Antwortnachricht an den entsprechenden Absende- bzw. Ausgangsanbieter weiterleiten können.

Ferner betrifft die vorliegende Erfindung ein Netzsystem mit einer Vernetzung einer Mehrzahl von Anbietern eines konvergenten Nachrichtendienstes gemäß Anspruch 8.

Der konvergente Nachrichtendienst kann dabei mindestens Dienste aus der Gruppe bestehend aus SMS, MMS, IM, EMS und Push-To-Talk zusammenführen.

Zur Nachrichtenübertragung wird in dem Netzsystem ein Transportprotokoll vorgesehen, welches dazu konzipiert ist, die mindestens eine Vermittlerfunktionseinheit sowohl als Adressat als auch als Absender einzusetzen. Im Falle, dass in dem Netzsystem eine Mehrzahl von Vermittlerfunktionseinheiten vorgesehen ist, so sollen alle, die in dem Netzsystem beteiligten Vermittlerfunktionseinheiten sowohl als Adressat als auch als Absender einsetzbar sein. Dabei soll es möglich sein, jeder der Vermittlerfunktionseinheiten, die in dem Netzsystem vorgesehen ist und an einem Nachrichtentransport zwischen Anbietern eines konvergenten Nachrichtendiensts beteiligt sein kann, eine Adresse zuzuordnen. Dadurch ist es möglich, dass ein Anbieter, welchen eine Nachricht eines anderen Anbieters erreicht, zwecks Adressierung einer Antwortnachricht, eine der Vermittlerfunktionseinheiten adressieren kann, welche bei dem Transport der ursprünglichen gesendeten Nachricht involviert war.

Darüber hinaus stellt die vorliegende Erfindung ein Computerprogramm mit Programmcodemitteln bereit, mit deren Hilfe alle Schritte eines erfindungsgemäßen Verfahrens durchgeführt werden können, wenn das Computerprogramm auf einem Computer oder einer entsprechenden Recheneinheit vorzugsweise innerhalb des Netzsystems ausgeführt wird.

Die vorliegende Erfindung stellt auch ein Computerprogrammprodukt mit einem auf einem computerlesbaren Medium gespeicherten Computerprogramm mit Programmcodemitteln bereit, mit deren Hilfe alle Schritte eines erfindungsgemäßen Verfahrens durchgeführt werden können, wenn das Computerprogramm auf einem Computer oder einer entsprechenden Recheneinheit, vorzugsweise innerhalb des Netzsystems ausgeführt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnung ,

Die Erfindung ist anhand von einer Ausführungsform in der Zeichnung schematisch dargestellt und wird im folgenden unter Bezugnahme auf die Zeichnung ausführlich beschrieben.

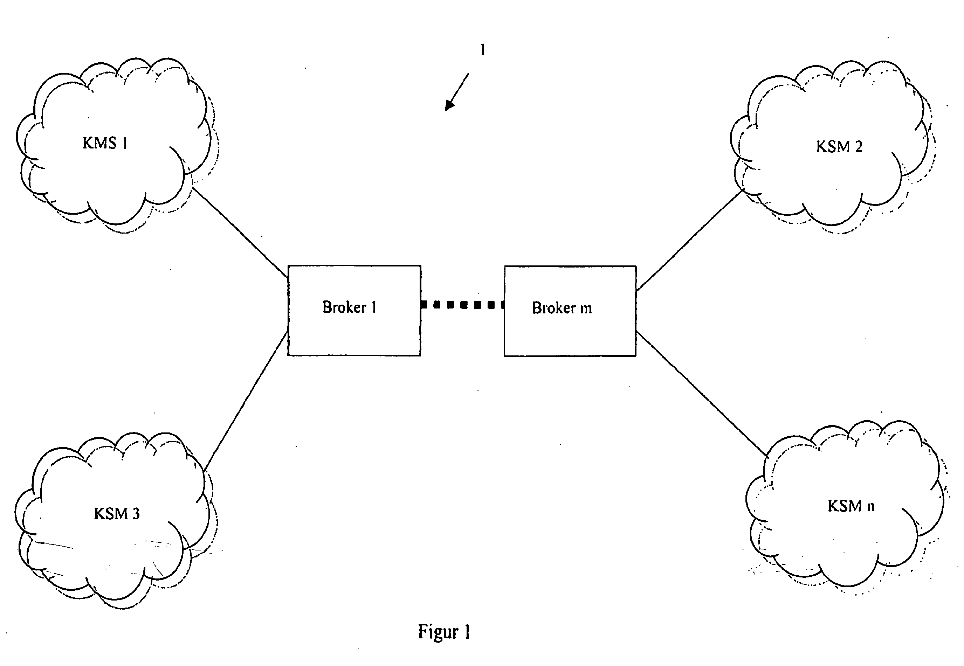

- Figur 1: zeigt eine schematische Darstellung einer Ausfüh- rungsform eines erfindungsgemäßen Netzsystems, in welchem eine Mehrzahl von Anbietern eines konver- genten Nachrichtendienstes miteinander versetzt sind.

### Detaillierte Beschreibung der Zeichnung

In Figur 1 ist eine schematische Darstellung eines Netzsystems 1 dargestellt. Innerhalb des Netzsystems 1 befinden sich eine Mehrzahl von Anbietern eines konvergenten Nachrichtendienstes bzw. konvergenten Messaging Services KMS 1, ..., KMS n. Zwischen die einzelnen Anbieter bzw. zwischen
denen ihnen jeweils zugeordneten konvergenten Messaging Umgebungen KMS 1, ..., KMS n, die hier jeweils in Form einer jeweiligen Wolke dargestellt sind, ist jeweils mindestens eine hier als Broker bezeichnete zentrale Vermittlerfunktionseinheit zwischengeschaltet. Zwischen dem Dienstanbieter KMS 1 und dem Dienstanbieter KMS 3 ist dabei eine Vermittlerfunktionseinheit Broker 1 zwischengeschaltet, der bei einem zwischen dem Anbieter KMS 1 und dem Anbieter KMS 3 auszuführenden Nachrichtentransport eine zentrale Routingfunktion innerhalb des Netzsystems 1 übernimmt. Soll jedoch eine Nachricht zwischen KMS 1 und KMS 2 transportiert werden, so wird diese Nachricht über eine Vielzahl von zwischengeschalteten Vermittlerfunktionseinheiten Broker 1, ..., Broker m, übermittelt. Das bedeutet, dass hier eine Vielzahl von Vermittlerfunktionseinheiten in Reihe geschaltet ist, und alle zusammen an einer Übertragung einer Nachricht zwischen KMS 1 und KMS 2 beteiligt sind. Gleiches gilt für eine Nachrichtenübertagung zwischen KMS 1 und KMS n oder zwischen KMS 3 und KMS 2 sowie zwischen KMS 3 und KMS n. Bei einer Nachrichtenübertragung zwischen KMS 2 und KMS n ist wiederum lediglich ein Broker m zwischengeschaltet, welcher bei einer zwischen KMS 2 und KMS n auszuführenden Nachrichtenübertragung eine Routingfunktion innerhalb des Netzsystems 1 übernimmt. Unabhängig davon, wie viele Vermittlerfunktionseinheiten zwischen die Anbieter geschaltet sind, zwischen welchen eine Nachrichtenübertragung stattfinden soll, so ist doch jeder der Mehrzahl von Anbietern unmittelbar nur mit genau einem Broker bzw. einer Vermittlerfunktionseinheit verbunden, so dass jeder der Anbieter seine Nachricht nur genau an eine Vermittlerfunktionseinheit adressieren muss. Dies erleichtert seitens der Anbieter die Adressierung und somit Übertragung von Nachrichten zu einer Mehrzahl anderer Anbieter enorm, da anstelle einer Mehrzahl von Adressierungen nur eine Adressierung, nämlich die der unmittelbar mit dem entsprechenden Anbieter verbundenen Vermittlerfunktionseinheit notwendig ist. Jeder der Vermittlerfunktionseinheiten wiederum kann mit einer Mehrzahl von Anbietern unmittelbar verbunden sein, so dass sich eine in Bezug auf Vermittlerfunktionseinheit und Dienstanbietern 1:n-Beziehung ergibt. Eine Vermittlerfunktionseinheit kann darüber hinaus, wie in Figur 1 erkennbar, mit einer weiteren Vermittlerfunktionseinheit verbunden sein, an welche ggf. eine Nachricht übertragen wird, bevor sie von der verbundenen Vermittlerfunktionseinheit weiter an einen Zielanbieter weitergeleitet wird. Wieviele Vermittlerfunktionseinheiten in Reihe bzw. miteinander verbunden sein können ist dabei beliebig und hängt ggf. von der Größe des Netzsystems bzw. der Anzahl der in dem Netzsystem vorhandenen Anbieter und der damit verbundenen konvergenten Messaging Umgebungen ab. Das bedeutet, dass die hier angegebenen Zahl m jede beliebige natürliche Zahl größer Null annehmen kann. Gleiches gilt für die hier die Anzahl der Anbieter angebende Zahl n.

## Patentansprüche

1. Verfahren zur Vernetzung einer Mehrzahl von Anbietern (KMS1, ..., KMS n) eines konvergenhen Nachrichtendienstes in einem Netzsystem (1), wobei mehreren Vermittlerfunktionseinhesiten (Broker 1, ..., Broker m) vorgesehen werden, die physikalisch zwischen die einzelnen Anbieter (KMS1, ... , KMS n) geschaltet werden und bei einem zwischen den Anbietern (KMS1, ..., EMS n) auszuführende Nachrichtentransport eine zentrale Routingfunktion innerha1b des Netzsystems (1) übernehmen, wobei die mehreren Vermittlerfunktioneseinheiten (Broker 1, ..., Broker m) zumindest zum Teil in Reihe hintereinander geschaltet werden.

2. Verfahren nach Anspruch 1, bei dem mindestens eine zentrale Vermittlerfunktionseinheit (Broker 1, ..., Broker m) bei einem Nachrichtentransport von einem ersten Anbieter zu einem zweiten. Anbieter gegenüber dem ersten Anbieter als Adressat und gegenüber dem zweiten Anbieter als Absender der zu transportierenden Nachricht fungiert, wodurch zwischen der Vermittlerfunktionseinheit und den jeweiligen Anbietern eine 1;n Beziehung realisiert wird.

3. Verfahren nach einem der Anspruche 1 oder 2, bei dem der konvergente Nachrichtendienst mindestens Dienste aus der Gruppe bestehend aus SMS, EMS, IM, BMS, Push-To-Talk zusammenführt.

4. Verfahren nach einem der voranstehenden Ansprüche, bei dem die Vermittlerfunktionseinheiten (Broker 1, ..., Broker m) in dem Netzsystem. (1) jeweils unmittelbar oder mittelbar zwischen die Anbieter KHS1 KHSn) geschaltet werden.

5. Verfahren nach einem der voranstehenden Ansprüche, bei dem zur Nachrichtenübertragung ein Transportprotokoll vier-, wendet wird, welches dazu konzipiert ist, mindestens eine Vermittlerfunktionaeinheit (Broker 1, ..., Broker m) sowohl als Adressat als auch als Absender einzusetzen.

6. Verfahrens nach einem der voranstehende Ansprüche, bei, dem jeder der Vermittlertunktionseinheiten (Broker 1, ..., Broker m) einer jeweilige zugeordnet wird.

7. Verfahren nach Anspruch 6, bei dem jedem bei einem Nachrichtentransport als Ziel-Anbieter fungierendem Anbieter die Adresse der mindestens einen beim Nachrichtentrans port zwischengeschalteten Vermittlerfunktionseinheit (Broker 1, ..., Broker m), zwecks Adressierung mindestens einer möglichen Antwortnachricht, zur Verfügung gestellt wird.

8. Netzayetem mit einer Vernetzung einer Mehrzahl von Anbietern (KMS1, .... KMS n) eines konvergenten Nachrichtendienstes, wobei in dem Netzsystem (1) mehrere Ermittlerfunktionseinheiten (Broker 1, ..., Broker m) vorgesehen sind, die physikalisch zwischen die einzelnen Anbieter (KMS1, ... , KMS n) gesachaltet sind und bei einem zwischen den Anbietern (KMS1, .... KMS n) auszuführenden Nachrichtentransport eine zentrale Routingfunktion innerhalb des Netzsystems (1) übernehmen, wobei die mehreren Vermittlerfunktionseinheiten (Broker 1; ..., Broker m) zumindest zum Teil in Reihe hintereinander geschaltet sind.

9. Netzsystem nach Anspruch 8, bei dem mindestens eine zentrale Vermittlerfunktionaeinheit (Broker 1, ..., Broker m) bei einem Nachrichtentranaport von einem ersten Anbieter zu einem zweiten Anbieter gegenüber dem ersten Anbieter- als Adressat und gegenüber dem zweiten Anbieter als Absenden der zu transportierenden Nachricht fungiert, wodurch zwischen der Vermittlerfunktionseinheit und den jeweiligen Anbietern eine 1:n Beziehung realisiert ist.

10. Netzsystem nach Anspruch 8 oder 9, bei dem der konvergente Nachrichtendienst, mindestens Dienste aus der Gruppe bestehend aus SMS, MMS, IM, EMS, Push-To-Talk zusammenführt.

11. Netzsystem nach einem der Ansprüche 8 bis 10, bei dem die. Vermittlerfunktionseinheiten Broker 1, ..., Broker m) in dem Netzsystem (1) vorgesehen sind, die jeweils unmittelbar oder mittelbar zwischen die Anbieter (KMs1, ..., KMS n) geschaltet sind.

12. Netzsystem nach einem der Ansprüche 8 bis 11, bei dem zur Nachrichtenübertragung ein Tranaportprotokoll vorgesehen ist, welches dazu konzipiert ist, die mindestens eine Vermittlerfunktionseinheit sowohl als Adressat als auch als Absender einzusetzen.

13. Netzsystem nach einem der Ansprüche 8 bis 12, bei dem jedes der Vermittlungsfunktionseinheit eine jeweilige Adresse zugeordnet ist.

14. Netzsystem nach Anspruch 13, bei dem jedem bei einem Nachrichtentranaport als Ziel-Anbieter fungierenden Anbieter die Adresse der mindestens einen beim Nachrichtentransport zwisohengesehalteten Vertmittlerfunktionseinheit, zwecks Adressierung mindestens einer möglichen Antwortnachricht, zur Verfügung gestellt werden kann.

15. Computerprogramm mit Programmcodemitteln, die dazu geeignet sind, bei Ablauf des Computerprogramms auf einem Computer oder einer entsprechenden Recheneinheit alle Schritte eines Verfahrens nach einem der Ansprüche 1 bis 7 auszuführen.

16. Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einem Computer oder einer entsprechenden Recheneinheit alle Schritte eines Verfahrens nach einem der Ansprüche 1 bis 7 auszuführen.

## Claims

1. Method for networking a plurality of providers (KMS1, ..., KMS n) of a convergent messaging service in a network system (1), wherein a plurality of broker function units (broker 1, ..., broker m) are provided, which are physically connected between the individual providers (KMS1, ..., KMS n) and during the transport of a message to be executed between the providers (KMS1, ... KMS n) assume a central routing function within the network system (1), wherein the plurality of broker function units (broker 1, ... broker m) are at least in part connected in series.

2. Method according to claim 1, in which at least one central broker function unit (broker 1, ..., broker m) during the transport of a message from a first provider to a second provider acts as addressee of the message to be transported with respect to the first provider and as sender of the message to be transported with respect to the second provider, whereby a 1:n relationship is realised between the broker function unit and the respective providers.

3. Method according to one of claims 1 and 2, in which the convergent messaging service brings together at least services from the group consisting of SMS, MMS, IM, EMS, Push-To-Talk.

4. Method according to one of the preceding claims, in which the broker function units (broker 1, ..., broker m) in the network system (1) are in each case connected directly or indirectly between the providers (KMS 1, ..., KMSn).

5. Method according to one of the preceding claims, in which for the transmission of a message a transport protocol is employed which is designed in such a way as to use at least one broker function unit (broker 1, ... broker m) both as addressee as well as sender.

6. Method according to one of the preceding claims, in which an address is associated with each of the plurality of broker function units (broker 1, broker m), respectively.

7. Method according to claim 6, in which the address of the at least one broker function unit (broker 1, ..., broker m) interconnected during the transport of a message is made available to each provider acting as target provider during the transport of the message, for the purposes of addressing at least one possible response message.

8. Network system with a networking of a plurality of providers (KMS1, .... KMS n) of a convergent messaging service, wherein in the network system (1) a plurality of broker function units (broker 1, ..., broker m) are provided, which are physically connected between the individual providers-(KMS1, ..., KMS n) and during the transport of a message to be executed between the providers (KMS1, ..., KMS n) assume a central routing function within the network system (1), wherein the plurality of broker function units (broker 1, ..., broker m) are connected at least in part in series.

9. Network system according to claim 8, in which at least one central broker function unit (broker 1, ..., broker m) during the transport of a message from a first provider to a second provider acts as addressee of the message to be transported with respect to the first provider and as sender of the message to be transported with respect to the second provider, whereby a 1:n relationship is realised between the broker function unit and the respective providers.

10. Network system according to claim 8 or 9, in which the convergent messaging service collects together services from the group consisting of SMS, MMS, IM, EMS, -Push-To-Talk.

11. Network system according to one of claims 8 to 10, in which a plurality of broker function units (broker 1, ..., broker m) are provided in the network system (1), which are in each case connected directly or indirectly between the providers (KMS 1, ..., KMS n).

12. Network system according to one of claims 8 to 11, in which for the transmission of a message a transport protocol is provided that is designed so as to use at least one broker function unit both as addressee as well as sender.

13. Network system according to one of claims 8 to 12, in which an address is associated with each of the plurality of broker function units, respectively.

14. Network system according to claim 13, in which the address of the at least one broker function unit interconnected during the transport of a message can be made available to each provider acting as target provider during the transport of a message, for the purposes of addressing at least one possible response message.

15. Computer program with program code means, which are suitable for executing all steps of a method according to one of claims 1 to 7 when a computer program is run on a computer or a corresponding computing unit.

16. Computer program product with a computer-readable medium and a computer program with program code means stored on the computer-readable medium, which are suitable for executing all steps of a method according to one of claims 1 to 7 when the computer program is run on a computer or a corresponding computing unit.

## Revendications

1. Procédé pour la mise en réseau d'une pluralité de fournisseurs (KMS1, ..., KMSn) d'un service de messagerie convergent dans un système en réseau (1), dans lequel sont prévues plusieurs unités fonctionnelles intermédiaires (Broker 1, ..., Broker m), qui sont branchées physiquement entre les fournisseurs individuels (KMS1, ..., KMSn) et qui, lors d'un transport de message à exécuter entre les fournisseurs (KMS1, ..., KMSn), assument une fonction de routage central à l'intérieur du système en réseau (1), et lesdites plusieurs unités fonctionnelles intermédiaires (Broker 1, ..., Broker m) sont branchées au moins partiellement en série les unes derrière les autres.

2. Procédé selon la revendication 1, dans lequel au moins une unité fonctionnelle intermédiaire centrale (Broker 1, ..., Broker m), lors d'un transport de message depuis un premier fournisseur vers un second fournisseur, fait office de destinataire vis-à-vis du premier fournisseur et fait office d'expéditeur vis-à-vis du second fournisseur, du message à transporter, grâce à quoi on réalise une relation de type 1:n entre l'unité fonctionnelle intermédiaire et les fournisseurs respectifs.

3. Procédé selon l'une des revendications 1, ou 2, dans lequel le service de messagerie convergent regroupe au moins des services du groupe constitué de SMS, MMS, IM, EMS, et Push-To-Talk.

4. Procédé selon l'une des revendications précédentes, dans lequel les unités fonctionnelles intermédiaires (Broker 1, ..., Broker m) dans le système en réseau (1) sont branchées respectivement directement ou indirectement entre les fournisseurs (KMS1, ..., KMSn).

5. Procédé selon l'une des revendications précédentes, dans lequel on utilise pour la transmission de messages un protocole de transport qui est conçu pour employer au moins une unité fonctionnelle intermédiaire (Broker 1, ..., Broker m) aussi bien comme destinataire que comme expéditeur.

6. Procédé selon l'une des revendications précédentes, dans lequel une adresse est associée respectivement à chacune des unités fonctionnelles intermédiaires (Broker 1, ..., Broker m).

7. Procédé selon la revendication 6, dans lequel l'adresse de ladite au moins une unité fonctionnelle intermédiaire (Broker 1, ..., Broker m) interposée lors du transport de message est mise à disposition à chaque fournisseur qui fait office de fournisseur cible lors d'un transport de message, dans le but de l'adressage d'au moins un message de réponse éventuel.

8. Système en réseau comprenant un réseau d'une pluralité de fournisseurs (KMS1, ..., KMSn) d'un service de messagerie convergent, dans lequel plusieurs unités fonctionnelles intermédiaires (Broker 1, ..., Broker m) sont prévues dans le réseau, lesquelles sont branchées physiquement entre les fournisseurs individuels (KMS1, ..., KMSn) et assument, lors d'un transport de message à exécuter entre les fournisseurs (KMS1, ..., KMSn), une fonction de routage central à l'intérieur du système en réseau (1), et lesdites plusieurs unités fonctionnelles intermédiaires (Broker 1, ..., Broker m) sont branchées au moins en partie en série les unes derrière les autres.

9. Système en réseau selon la revendication 8, dans lequel au moins une unité fonctionnelle intermédiaire centrale (Broker 1, ..., Broker m), lors d'un transport de message depuis un premier fournisseur vers un second fournisseur, fait office de destinataire vis-à-vis du premier fournisseur et fait office d'expéditeur vis-à-vis du second fournisseur, du message à transporter, grâce à quoi on réalise une relation de type 1:n entre l'unité fonctionnelle intermédiaire et les fournisseurs respectifs.

10. Système en réseau selon l'une des revendications 8 ou 9, dans lequel le service de messagerie convergent regroupe au moins des services du groupe constitué de SMS, MMS, IM, EMS, et Push-To-Talk.

11. Système en réseau selon l'une des revendications 8 à 10, dans lequel les unités fonctionnelles intermédiaires (Broker 1, ..., Broker m) sont prévues dans le système en réseau (1), lesquelles sont branchées respectivement directement ou indirectement entre les fournisseurs (KMS, ..., KMSn).

12. Système en réseau selon l'une des revendications 8 à 11, dans lequel on prévoit pour la transmission de messages un protocole de transport qui est conçu pour employer au moins une unité fonctionnelle intermédiaire aussi bien à titre de destinataire qu'à titre d'expéditeur.

13. Système en réseau selon l'une des revendications 8 à 12, dans lequel une adresse est associée respectivement à chacune des unités fonctionnelles intermédiaires.

14. Système en réseau selon la revendication 13, dans lequel l'adresse de ladite au moins une unité fonctionnelle intermédiaire. (Broker 1, ..., Broker m) interposée lors du transport de message peut être mise à disposition à chaque fournisseur qui fait office de fournisseur cible lors d'un transport de message, dans le but de l'adressage d'au moins un message de réponse éventuel.

15. Programme d'ordinateur comprenant des moyens formant code de programme, qui sont appropriés, lors du déroulement du programme d'ordinateur sur un ordinateur ou sur une unité de calcul correspondante, pour exécuter toutes les étapes d'un procédé selon l'une des revendications 1 à 7.

16. Produit de programme d'ordinateur avec un support lisible à l'ordinateur et un programme d'ordinateur mémorisé sur le support lisible à l'ordinateur avec des moyens formant code de programme qui sont appropriés, lors du déroulement du programme d'ordinateur sur un ordinateur ou sur une unité de calcul correspondante, pour exécuter toutes les étapes d'un procédé selon l'une des revendications 1 à 7.
